Europäisches Patentamt

European Patent Office

Office européen des brevets

(19)

(11) Veröffentlichungsnummer: **0 066 250**
**B1**

(12) **EUROPÄISCHE PATENTSCHRIFT**

(45) Veröffentlichungstag der Patentschrift:
27.12.85

(21) Anmeldenummer: **82104591.1**

(22) Anmeldetag: **26.05.82**

(51) Int. Cl.⁴: **H 02 B 1/16**

(54) Vorrichtung zum stationären Erden eines Hochspannungsleiters.

(30) Priorität: **26.05.81 DE 3120821**

(43) Veröffentlichungstag der Anmeldung:
**08.12.82 Patentblatt 82/49**

(45) Bekanntmachung des Hinweises auf die Patenterteilung:
**27.12.85 Patentblatt 85/52**

(84) Benannte Vertragsstaaten:
**AT BE CH FR IT LI NL SE**

(56) Entgegenhaltungen:
**DE - B - 2 238 652**
**GB - A - 2 002 964**

(73) Patentinhaber: **ARCUS ELEKROTECHNIK Alois Schiffmann GmbH, Streitfeldstrasse 15, D-8000 München 80 (DE)**

(72) Erfinder: **Czernek, Georg, Peter Rosegger-Strasse 12, D-8905 Mering (DE)**
Erfinder: **Schneider, Walter, Karl-Witthalm-Strasse 30, D-8000 Müchen 70 (DE)**

(74) Vertreter: **Reinländer & Bernhardt Patentanwälte, Orthstrasse 12, D-8000 München 60 (DE)**

BUNDESDRUCKEREI BERLIN

## Beschreibung

Die Erfindung betrifft eine Vorrichtung zum stationären Erden eines Hochspannungsleiters nach dem Oberbegriff des Anspruchs 1.

Bei einer solchen bekannten Vorrichtung ist die Erdungsstange vertikal verschiebbar angeordnet und das obere Ende der Erdungsstange wird entweder von oben in den Kupplungsteil des Festpunktes eingehängt und daran mittels einer Spindel festgeschraubt oder von unten in den glockenförmigen Kupplungsteil eingesteckt und durch Drehbewegung mit diesem verschraubt (DE-B-2 238 652). Zum Einführen der Erdungsstange in die Kontakteinrichtung ist bei dieser bekannten Vorrichtung eine begrenzte Kippbewegung der Erdungsstange möglich. Bei der bekannten Vorrichtung erfolgt die Kontaktierung der Erdungsstange in der Kontakteinrichtung durch federnde Kontaktelemente, es besteht also zwischen der Kontakteinrichtung und der Erdungsstange eine gleitende Kontaktberührung, die keine hohe Kontaktsicherheit und somit im Falle eines hohen Erdungsstroms keinen einwandfreien Schutz bietet.

Der Erfindung liegt die Aufgabe zugrunde, eine Vorrichtung nach dem Oberbegriff des Anspruchs 1 zu schaffen, die einen sicheren Stromübergang zwischen der Erdungsstange und der geerdeten Kontakteinrichtung gewährleistet.

Gelöst wird diese Aufgabe durch die Merkmale des Kennzeichens des Anspruchs 1.

Weiterbildungen sind in den abhängigen Ansprüchen angegeben.

Die erfindungsgemäße Ausbildung führt dazu, daß die Erdungsstange für die Kontaktgabe mit dem Kontaktfestpunkt des zu erdenden Leiters nicht angehoben, also in vertikaler Richtung verschoben wird, sondern daß die Erdungsstange in den Kupplungsteil des Kontaktfestpunkts eingeschwenkt wird. Damit entfällt eine gleitende Kontaktberührung, vielmehr ist die Erdungsstange in der geerdeten Kontakteinrichtung festgelegt, es besteht also ein großflächiger Druckkontakt zwischen Erdungsstange und Kontakteinrichtung.

Das Festklemmen des oberen Endes der Erdungsstange in dem Kupplungsteil erfolgt durch Anlegen unter Druck von Klemmteilen am oberen Ende der Erdungsstange an die Innenflächen einer Ausnehmung in dem Kupplungsteil.

Die vorzugsweise Ausbildung mit den in Hinterschneidungen eingreifenden Vorsprüngen dient dazu, die Kurzschlußfestigkeit der Vorrichtung zu erhöhen, d. h. ein Ausschleudern des oberen Endes der Erdungsstange aus dem Kupplungsteil durch die dynamischen Kurzschlußkräfte zu vermeiden.

Bei der Ausführungsform des oberen Endes der Erdungsstange mit zwei vertikalen Klemmschienen ist es möglich, in Schaltanlagen zu arbeiten, bei denen die zu erdenden Leiter unterschiedliche Höhen aufweisen, d. h. bei denen der Abstand zwischen Schwenkpunkt der Erdungsstange und dem Kontaktfestpunkt nicht gleich ist. Bei dieser Ausführungsform, bei welcher der Kupplungteil auch nach oben offen ist, ist es möglich, an verschiedenen Punkten entlang der gesamten Länge der Klemmschienen eine Kontaktgabe zwischen dem oberen Ende der Erdungsstange und dem Kupplungteil herbeizuführen.

Die Erfindung wird beispielhaft anhand der Zeichnung beschrieben, in der sind

Fig. 1 eine Vorderansicht der erfindungsgemäßen Vorrichtung,

Fig. 2 ein vergrößerter Vertikalschnitt einer ersten Ausführungsform eines oberen Endes einer Erdungsstange, die in den Kupplungteil eingesetzt, darin jedoch noch nicht verklemmt ist,

Fig. 3 ein Horizontalschnitt längs der Linie III-III in Fig. 2,

Fig. 4 eine vergrößerte Seitenansicht einer weiteren Ausführungsform des oberen Endes der Erdungsstange und

Fig. 5 ein Horizontalschnitt längs der Linie IV-IV in Fig. 4.

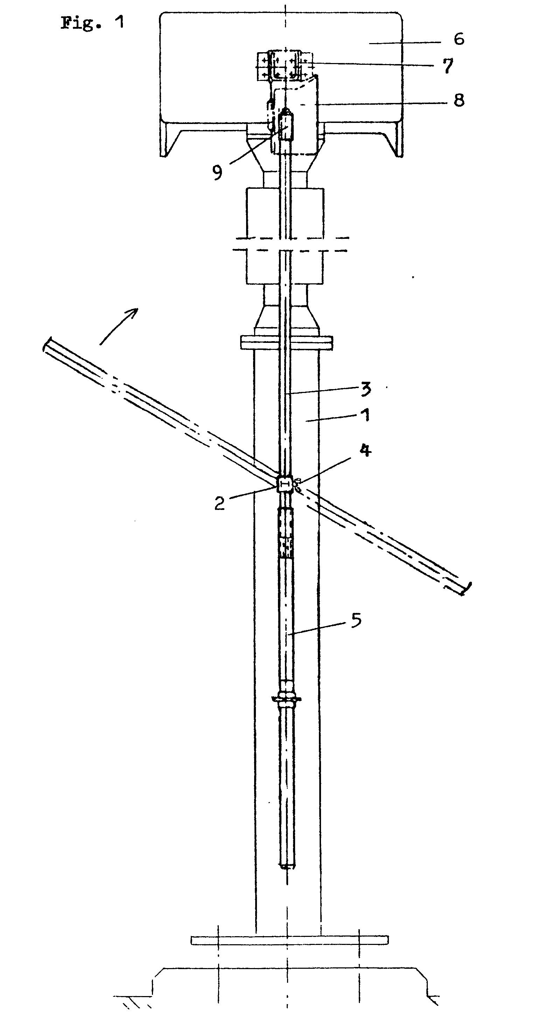

Gemäß Fig. 1 ist an einem Stützer 1 eine Buchse 2 befestigt, die als Kontakteinrichtung dient und geerdet ist. In der Buchse 2 ist der leitende Teil 3 der Erdungsstange fest angebracht, beispielsweise in der Weise, daß die geschlitzte Buchse mittels einer Flügelschraube 4 fest um den leitenden Teil 3 der Erdungsstange gespannt ist. Zur Betätigung der Erdungsstange durch die Bedienungsperson dient der isolierende Teil 5 der Erdungsstange. An dem zu erdenden Leiter 6 ist ein Kontaktfestpunkt 7 angebracht, der einen Kupplungteil 8 aufweist, in den das obere Ende 9 der Erdungsstange einschwenkbar ist, und zwar aus der mit gestrichelten Linien gezeigten Stellung in Richtung des Pfeils.

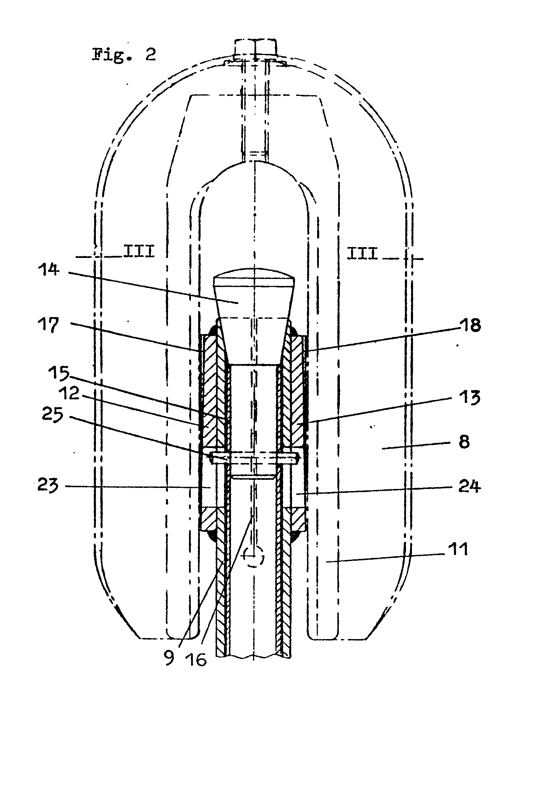

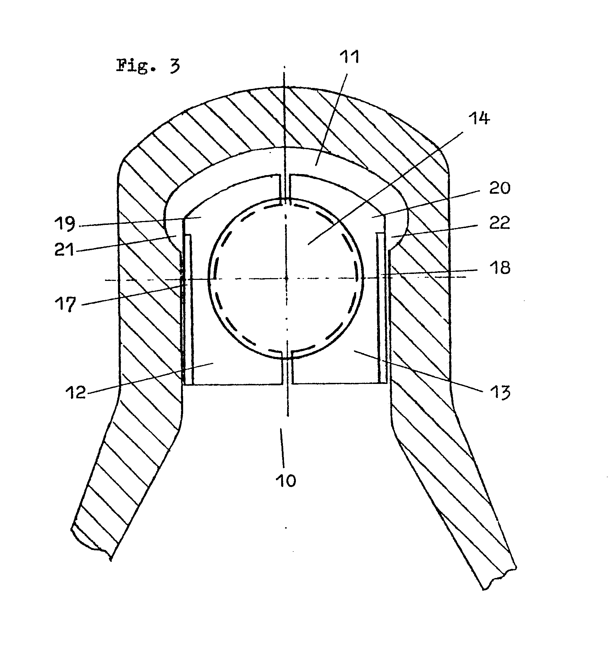

Gemäß Fig. 2 und 3 weist der Kupplungteil eine seitliche Öffnung 10 auf. In die Ausnehmung 11 des Kontaktteils 8 ist das obere Ende 9 der Erdungsstange eingeschwenkt. Dieses obere Ende der Erdungsstange ist von einer geschlitzten Hülse umgeben, die aus den Klemmteilen 12 und 13 besteht. An der Spitze ist die Erdungsstange mit einem Konus 14 versehen, der durch ein im Inneren der Erdungsstange geführtes Rohr 15 über einen (nicht dargestellten) Spindelbetrieb in die Spitze der Erdungsstange einziehbar ist. In dem oberen Ende der Erdungsstange ist ein Längsschlitz 16 angebracht, der ein Aufweiten des oberen Endes der Erdungsstange erlaubt und somit die Teile 12 und 13 der Hülse spreizt, die sich an die Innenfläche der Ausnehmung 11 des Kontaktteils anpressen. Die Hülsenteile 12 und 13 sind mit nach oben zunehmenden Ausfräsungen 17 und 18 versehen, welche aber nicht die gesamte Breite der Hülsenteile einnehmen, wodurch sich Vorsprünge 19 und 20 ergeben, die im festgeklemmten Zustand hinter die Hinterschneidungen 21 und 22 der Ausnehmung 11 des Kupplungteils 8 einrasten. Ein in Längsschlitzen 23 und 24 geführter und in dem Rohr 15 festgelegter Stift 25 verhindert ein Drehen des Rohrs 15 im oberen Ende 9 der Erdungsstange beim Einziehen des Konus in die Spitze der Erdungsstange.

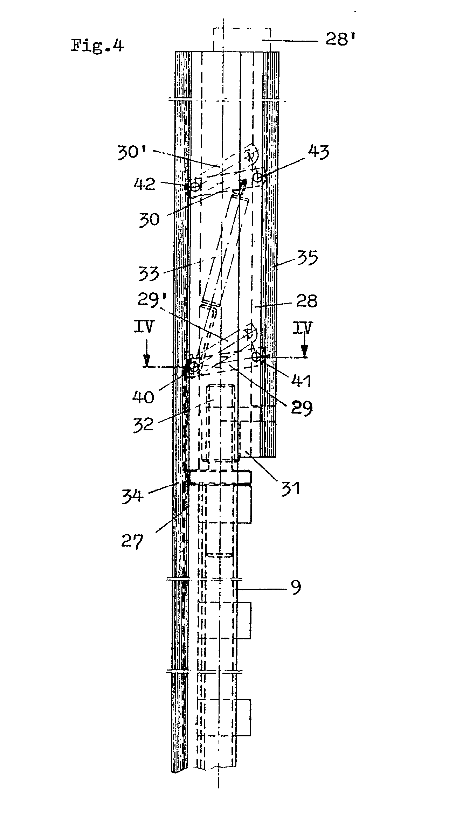

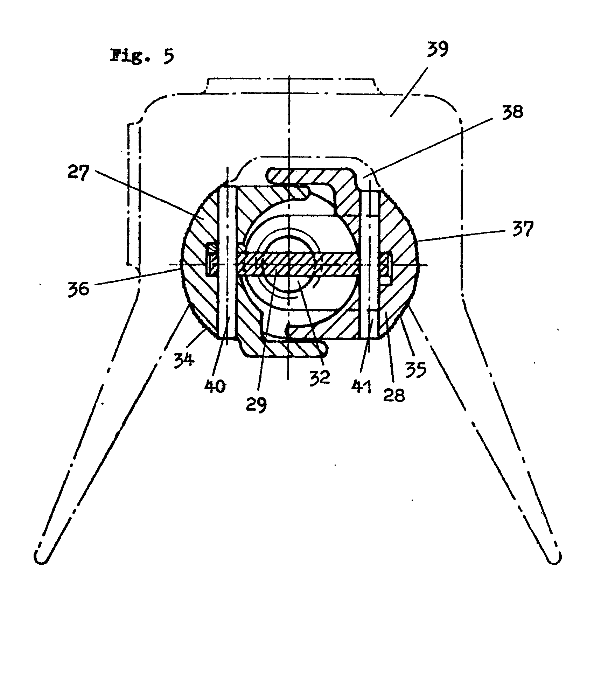

Gemäß Fig. 4 und 5 ist mit dem oberen Ende 9 der Erdungsstange eine feste Klemmschiene 27 verbunden. Dem oberen Teil dieser festen Klemmschiene liegt eine bewegliche Klemmschiene 28 gegenüber, die über Querlaschen 29 und 30 an der festen Klemmschiene angelenkt ist. Ein an der bewegbaren Klemmschiene 28 angebrachter Ansatz 31 ist mit einem Gewindeloch versehen, in dem ein am oberen Ende 9 der Erdungsstange angebrachter Gewindebolzen 32 geführt ist. Durch Drehen des Gewindebolzens 32 wird die bewegbare Klemmschiene 28 auf die feste Klemmschiene 27 zu bewegt bzw. von dieser entfernt, wobei eine an der Querlasche 30 angreifende Zugfeder 33 die Auseinanderbewegung der Klemmschienen, also den Klemmdruck, unterstützt. Die Außenflächen der Klemmschienen 27 und 28 sind mit feinen Zahnungen 34 und 35 versehen. Die gekrümmten Außenflächen der Klemmschienen 27 und 28 liegen an gebogenen Innenwänden 36 und 37 der Ausnehmung 38 des Kupplungsteils 39 an. Die gekrümmten Außenflächen der Klemmschienen 27 und 28 wirken als Vorsprünge in den als Hinterschneidungen wirkenden gebogenen Innenwänden 36 und 37 der Ausnehmung des Kupplungsteils. Die Querlaschen 29 und 30 sind mittels in den Klemmschienen 27 und 28 festgelegten Stiften 40, 41, 42 und 43 an den Klemmschienen festgelegt. Mit strichpunktierten Linien sind die Stellungen 29' und 30' der Querlaschen im gelösten Zustand der Klemmung gezeigt, in dem die bewegbare Klemmschiene die Stellung 28' einnimmt.

## Patentansprüche

1. Vorrichtung zum stationären Erden eines Hochspannungsleiters (6) mit einer an einem Stützer (1) gehaltenen Erdungsstange (3, 5), die einen sich zwischen dem Stützer (1) und dem zu erdenden Leiter (6) erstreckenden leitenden Teil (3) aufweist, dem eine geerdete Kontakteinrichtung zugeordnet ist, die eine Buchse (2) aufweist, die um eine horizontale Achse relativ zu dem Stützer (1) schwenkbar ist, und mit einem an dem zu erdenden Leiter (6) angebrachte Kontaktfestpunkt (7), der einen Kupplungsteil (8; 39) aufweist, an dem das obere Ende (9) der Erdungsstange (3, 5) festklemmbar ist, dadurch gekennzeichnet, daß die Erdungsstange (3, 5) mit der Buchse (2) fest verbunden ist und daß der Kupplungsteil (8; 39) des Kontaktfestpunkts (7) eine seitliche Öffnung (10) zum schwenkbaren Einführen des oberen Endes (9) der Erdungsstange aufweist.

2. Vorrichtung nach Anspruch 1, dadurch gekennzeichnet, daß das obere Ende (9) der Erdungsstange (3, 5) in einer Ausnehmung (11; 38) des Kupplungsteils (8; 39) festklemmbar ist.

3. Vorrichtung nach Anspruch 1 oder 2, dadurch gekennzeichnet, daß am oberen Ende (9) der Erdungsstange eine in Längsrichtung geteilte Hülse angebracht ist, deren Klemmteile (12, 13) durch einen Konus (14) spreizbar sind.

4. Vorrichtung nach Anspruch 1 oder 2, dadurch gekennzeichnet, daß am oberen Ende (9) der Erdungsstange zwei vertikale Klemmschienen (27, 28) angebracht sind, die mittels sie verbindender Querlaschen (29, 30; 29', 30') spreizbar sind.

5. Vorrichtung nach einem der Ansprüche 1 bis 4, dadurch gekennzeichnet, daß die Klemmteile (12, 13; 27, 28) am oberen Ende (9) der Erdungsstange mit Vorsprüngen (19, 20) versehen sind, die in Hinterschneidungen (21, 22; 36, 37) in der Ausnehmung (11; 38) des Kupplungsteils (8; 39) eingreifen.

## Claims

1. A device for the stationary earthing of high voltage conductor (6) having an earth rod (3, 5) held at a post (1), which rod contains a conductive section (3) extending between the post and the conductor to be earthed, to which section an earthed contact means is allocated which contains a sleeve (2) being pivotable around a horizontal axis relatively to the post (1), and having a contact point (7) provided at the conductor (6) to be earthed, which contact point contains a coupling part (8; 39) at which the upper end (9) of the earthing rod (3, 5) can be clamped, characterized in that the earth rod (3, 5) is fixed to the sleeve (2), and that the coupling part (8; 39) of the contact point (7) has a lateral opening (10) for the pivotable insertion of the upper end (9) of the earth rod.

2. A device according to claim 1, characterized in that the upper end (9) of the earth rod (3, 5) can be clamped in a recess (11; 38) of the coupling part (8; 39).

3. A device according to claim 1 or 2, characterized in that at the upper end (9) of the earth rod a sleeve divided in the longitudinal direction is mounted, the clamping parts (12, 13) of which are spread by a cone (14).

4. A device according to claim 1 or 2, characterized in that at the upper end (9) of the earth rod two vertical clamping rails (27, 28) are mounted which are spread by means of transverse side-bars (29, 30; 29', 30') connecting them.

5. A device according to one of the claims 1 to 4, characterized in that the clamping parts (12, 13; 27, 28) at the upper end (9) of the earth rod are provided, with projections (19, 20) which engage in undercuts (21, 22; 36, 37) in the recess (22; 38) of the coupling part (8; 39).

## Revendications

1. Dispositif pour la mise à la terre permanente d'un conducteur haute tension (6), avec un perche (3, 5) maintenue sur un support (1) et présentant une section conductrice (3) prévue entre ce dernier et le conducteur (6), un dispositif de contact mis à la terre, affecté à la section (3) précitée, étant muni d'un manchon (2) qui pivote par rapport au support (1) autour d'un axe horizontal, et avec un point fixe de contact (7), prévu sur le conducteur (6) à mettre à la terre et doté d'un élément de jonction (8; 39), sur lequel est fixée l'extrémité supérieure (9) de la perche (3, 5), caractérisé en ce que la perche (3, 5) est assemblée avec le manchon (2) et en ce que l'élément de jonction (8; 39) du point fixe (7) présente une ouverture latérale (10) qui permet d'introduire par un mouvement pivotant l'extrémité supérieure (9) de la perche.

2. Dispositif selon la revendication 1, caractérisé en ce que l'extrémité supérieure (9) de la perche (3, 5) est maintenue par serrage dans un évidement (11; 38) de l'élément de jonction (8; 39).

3. Dispositif selon une des revendications 1 et 2, caractérisé en ce que l'extrémité supérieure (9) de la perche est munie d'une douille fendue dans le sens de la longueur et dont les pièces de serrage (12, 13) peuvent être écartées par un cône (14).

4. Dispositif selon une des revendications 1 et 2, caractérisé en ce que deux barres de serrage verticales (27, 28), prévues sur l'extrémité supérieure (9) de la perche, peuvent être écartées au moyen d'éclisses transversales (29, 30; 29', 30') qui les relient.

5. Dispositif selon une quelconque des revendications 1 à 4, caractérisé en ce que les pièces de serrage (12, 13; 27, 28), prévues à l'extrémité supérieure (9) de la perche, sont dotées de saillies (19, 20) qui s'encastrent dans des contre-dépouilles (21, 22; 36, 37) de l'évidement (11; 38) de l'élément de jonction (8; 39).

0 066 250

Fig. 1

Fig. 2

Fig. 3

Fig.4

Fig. 5